**Europäisches Patentamt**

**European Patent Office**

**Office européen des brevets**

(19)

(11) Veröffentlichungsnummer: **0 172 851**
**B1**

(12) **EUROPÄISCHE PATENTSCHRIFT**

(45) Veröffentlichungstag der Patentschrift:
**10.05.89**

(51) Int. Cl.⁴: **A 63 C 5/12**

(21) Anmeldenummer: **85900946.6**

(22) Anmeldetag: **15.02.85**

(86) Internationale Anmeldenummer:
**PCT/AT 85/00005**

(87) Internationale Veröffentlichungsnummer:
**WO 85/03642 (29.08.85 Gazette 85/19)**

(54) **LEICHTBAUKERN, SOWIE VERBUNDBAUTEIL UND SKI MIT DIESEM LEICHTBAUKERN.**

(30) Priorität: **15.02.84 AT 498/84**

(43) Veröffentlichungstag der Anmeldung:
**05.03.86 Patentblatt 86/10**

(45) Bekanntmachung des Hinweises auf die Patenterteilung:
**10.05.89 Patentblatt 89/19**

(84) Benannte Vertragsstaaten:
**AT DE FR**

(56) Entgegenhaltungen:
**AT-A-293 240**
**FR-A-2 248 860**
**US-A-3 738 675**

(73) Patentinhaber: **ISOSPORT VERBUNDBAUTEILE Ges.m.b.H., Industriestrasse 2, A-7000 Eisenstadt (AT)**

(72) Erfinder: **GRUBÖCK, Horst, Ottensteinstrasse 82, A-2344 Maria Enzersdorf- Südstadt (AT)**
Erfinder: **KÖHLER, Rolf, Dr. L. Riegerstrasse 40/6, A-2340 Mödling (AT)**

(74) Vertreter: **Stampfer, Heinz, ISOVOLTA Österreichische Isolierstoffwerke AG Industriezentrum- Süd, A-2351 Wiener Neudorf (AT)**

**Beschreibung**

Technisches Gebiet

Die Erfindung betrifft einen Leichtbaukern, der an zwei einander gegenüberliegenden Seiten von zwei zueinander zumindest angenähert parallelen Kernfrontflächen begrenzt ist und der mehrere zueinander parallel verlaufende und miteinander verbundene Stützwellen aus flächigem Material aufweist, deren Wellenerzeugenden zumindest nahezu senkrecht den Kernfrontflächen stehen. Die Erfindung betrifft ferner einen Verbundbauteil, insbesondere einen Ski, der den erfindungsgemäßen Leichtbaukern enthält.

Stand der Technik

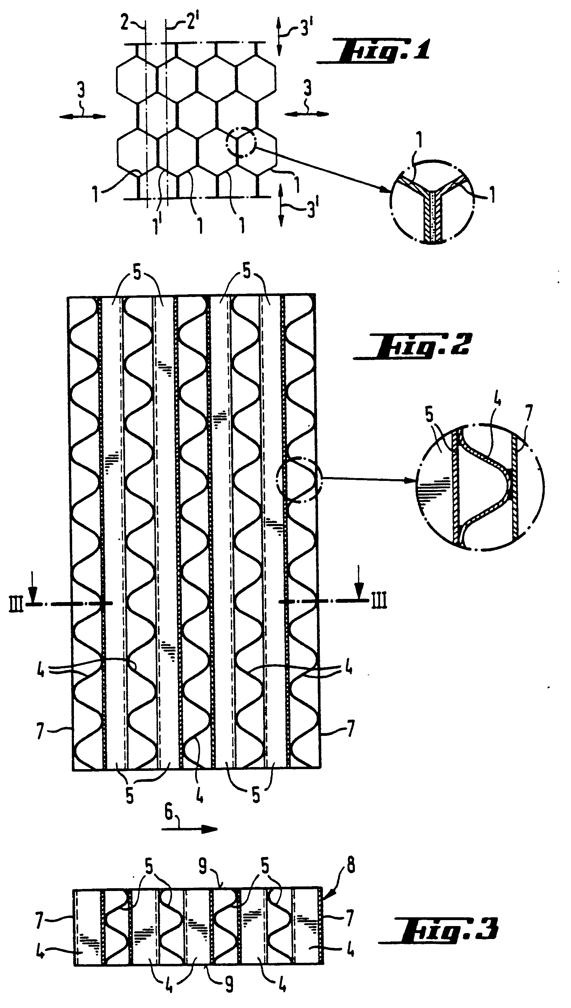

Nachstehend sei anhand von Fig. 1 der Stand der Technik (US-A-3 970 324 auf dem Gebiet von Leichtbaukernen der oben genannten Art erläutert, welche in Form der bekannten Kerne mit Bienenwabenstruktur (Honeycomb-Kerne) realisiert sind. Fig. 1 zeigt den Aufbau eines solchen Bienenwabenkerns in der Aufsicht mit den Kernfrontflächen parallel zur Zeichnungsebene. Der Bienenwabenkern besteht aus Wellen 1 aus flächigem Material mit trapezförmigen Wellenbergen bzw. Wellentälern, wobei benachbarte Wellen 1, 1' gegeneinander um 180° phasenverschoben sind und an ihren zu den Wellensymmetrieflächen 2, 2' parallelen Flächen miteinander z. B. durch Verklebung verbunden sind. Ein solcher Bienenwabenkern hat - über geeignete Deckplatten - senkrecht zu seinen Frontflächen wirkende Druckbelastungen aufzunehmen, doch ist der Kern, bevor er durch Integrierung in einen Verbundbauteil also z. B. durch Verklebung der Kernfrontflächen mit steifen Deckschichten in seiner Form stabilisiert wird, in Richtung der Pfeile 3, 3', d. h. also in Richtungen parallel zu den Kernfrontflächen extrem leicht deformierbar. Kräfte, die zu einer solchen Deformation führen könnten, müssen also z. B. durch die Klebefugen zwischen dem Kern und den genannten steifen Deckschichten aufgenommen werden. Außerdem sind Bienenwabenkerne für sich wegen ihrer extrem leichten Verformbarkeit nicht einfach auf hohe Maßgenauigkeit zu bearbeiten.

Darstellung der Erfindung

Der Erfindung liegt nun u.a. die Aufgabe zugrunde, einen Leichtbaukern der eingangs genannten Art anzugeben, der eine höhere Gesamtsteifigkeit aufweist als die bekannten Bienenwabenkerne.

Diese Aufgabe wird in dem erfindungsgemäßen Leichtbaukern gelöst, der gekennzeichnet ist durch zwischen benachbarten Stützwellen angeordnete Versteifungswellen aus flächigem Material, deren Wellenerzeugenden senkrecht zu denen der Stützwellen verlaufen, wobei benachbarte Stütz- und Versteifungswellen an ihren Wellenbergen direkt oder über ebene Stabilisierungslagen aus flächigem Material miteinander verbunden sind.

Dabei kann vorteilhaft zumindest ein Teil der Stützwellen und/oder der Versteifungswellen und/oder der ebenen Stabilisierungslagen aus Papier bestehen.

Gemäß einer vorteilhaften Ausgestaltung der Erfindung ist in dem erfindungsgemäßen Leichtbaukern zumindest ein Teil der Stützwellen und/oder der Versteifungswellen und/oder der ebenen Stabilisierungslagen mit einem Kunstharz imprägniert. Dabei kann dieses Kunstharz vorteilhaft als Bindemittel zur gegenseitigen Verbindung einzelner Elemente des Leichtbaukernes dienen.

Nach einer anderen vorteilhaften Ausgestaltung der Erfindung liegen in dem Leichtbaukern zwischen zwei benachbarten Versteifungszonen mindestens zwei zueinander parallel verlaufende Stützwellen.

Der Erfindung liegen ferner die Aufgaben zugrunde, einen Verbundbauteil bzw. einen Ski anzugeben, welche Leichtbaukerne aufweisen, die an ihren Frontflächen mit steifen Dickschichten verklebt sind und die jeweils höhere Gesamtsteifigkeiten aufweisen als die bekannten Bienenwabenkerne.

Diese Aufgaben werden in dem erfindungsgemäßen Verbundbauteil sowie in dem erfindungsgemäßen Ski gelöst, die dadurch gekennzeichnet sind, daß sie einen erfindungsgemäßen Leichtbaukern enthalten, wobei bei dem im Ski verwendeten Leichtbaukern die Stützwellen in Skilängsrichtung verlaufen.

Kurze Beschreibung der erfindungswesentlichen Zeichnungen im Zusammenhang mit zwei Wegen zur Ausführung der Erfindung

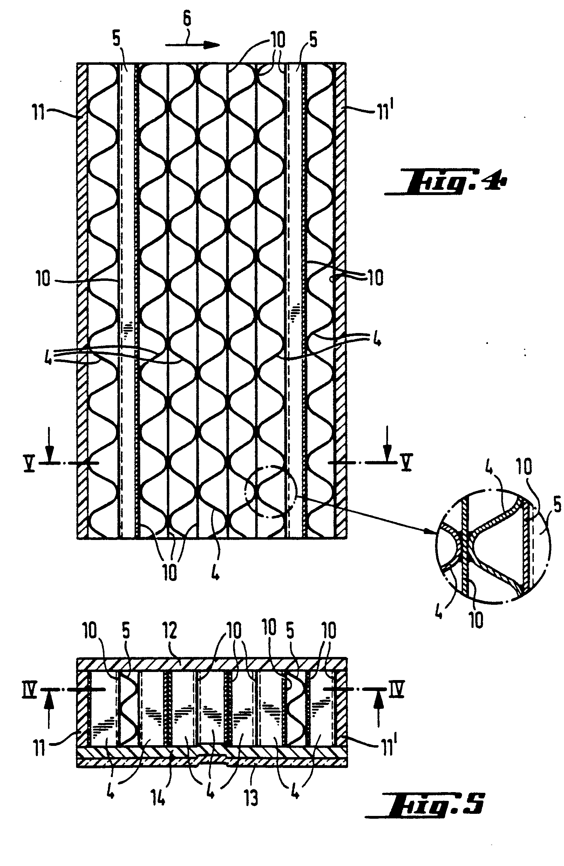

Die Erfindung wird nachstehend anhand der Figuren 2 bis 5 eingehend erläutert.

Die Figur 2 zeigt in schematischer Darstellung in der Aufsicht und Figur 3 im Schnitt längs der Linie III - III in Fig. 2 einen aus gewelltem Papier aufgebauten Leichtbaukern, im wesentlichen bestehend aus Stützwellen 4 und zwischen diesen Stützwellen angeordnete Versteifungswellen 5. Die Grammatur des für die Herstellung dieser Stützwellen und Versteifungswellen verwendeten Papiers liegt dabei etwa im Bereich zwischen 60 und 150 g/m². 

Zur Herstellung des Leichtbaukernes gemäß den Figuren 2 und 3 werden in Richtung des Pfeiles 6 in der aus Fig. 2 ersichtlichen Reihenfolge jeweils als Zuschnitte größerer Flächenausdehnung insgesamt zwei als Decklagen 7 dienende Papierzuschnitte, fünf Stützwellen 4 und vier Versteifungswellen 5, die alle vorher mit Epoxydharz imprägniert wurden, übereinandergeschichtet und der so erhaltene Stapel dann zwischen die Preßplatten einer beheizten Presse verbracht, in der die Stapeldicke auf Maß gehalten und das Epoxydharz unter Verbindung der einzelnen Komponenten des Leichtbaukerns ausgehärtet wird. Aus der dabei hergestellten Platte werden dann die leistenförmigen Leichtbaukerne 8 durch Sägeschnitte entlang den Kernfrontflächen 9 abgetrennt. Gemäß einem speziellen Beispiel betrug die Grammatur des für die Stützwellen 4 verwendeten Papiers 120 g/m² und die des für die Versteifungswellen 5 und die Decklagen 7 verwendeten Papiers 60 g/m². Die Imprägnierung mit dem Epoxydharz ist so geführt, daß der Anteil des Harzes im fertigen Leichtbaukern etwa 40 Gew.-% beträgt.

Ein mit einem erfindungsgemäßen Leichtbaukern versehener Ski sei nun anhand der Figuren 4 und 5 beschrieben, wobei Fig. 4 einen Schnitt längs der Linie IV - IV in Fig. 5 und Fig. 5 einen Querschnitt durch den Ski längs der Linie V - V in Fig. 4 zeigen.

Zum Aufbau des Leichtbaukerns werden hier Wellenverbunde verwendet, die jeweils aus einer Bahn aus gewelltem Papier bestehen, die einseitig mit einer Stabilisierungslage 10 aus Papier verbunden ist. Solche Wellenverbunde sind im Handel erhältlich. In dem Beispiel gemäß den Figuren 4 und 5 haben die für die Stützwellen 4 einzusetzenden Wellenverbunde eine größere Wellenhöhe als die Wellenverbunde für die Versteifungswellen 5.

Zur Herstellung des Skikerns werden nun die benötigten Zuschnitte aus diesen Wellenverbunden mit Epoxydharz imprägniert und auf einem dünnen Kunststofflaminat-Deckblatt 11 in Richtung des Pfeiles 6, jeweils mit den Stabilisierungslagen 10 nach oben und in einer Reihenfolge wie aus den Figuren 4 und 5 ersichtlich, ein Stapel geformt, der dann mit einem zweiten Kunststofflaminat-Deckblatt 11′ abgedeckt wird. Die Herstellung des Kernes erfolgt dann wie anhand der Figuren 2 und 3 beschrieben.

Der Skikern wird schließlich aus der durch Verpressung und Aushärtung hergestellten (in Fig. 4 im Schnitt) gezeigten Platte in der gewünschten Keilform herausgeschnitten und wie üblich bei der Skiherstellung eingesetzt. Dabei werden an beiden Seiten des Kerns Deckschichten aufgeklebt, die an der Skioberseite durch ein mit einer Oberflächendekorschicht versehenes, als Obergurt dienendes Epoxydharzlaminat 12 und an der Skiunterseite durch ein mit einem Skigleitbelag 13 versehenes als Untergurt dienendes Epoxydharzlaminat 14 gebildet werden.

## Gewerbliche Verwertbarkeit

Der erfindungsgemäße Leichtbaukern kann vorteilhaft als Kern von plattenförmigen Verbundmaterialien eingesetzt werden, wie man sie vielfach im Leichtbau verwendet. Der erfindungsgemäße Ski, der den erfindungsgemäßen Leichtbaukern enthält, ist vorzugsweise ein Langlaufski, bei dem es auf ein möglichst geringes Gewicht ankommt.

## Patentansprüche

1. Leichtbaukern, der an zwei einander gegenüberliegenden Seiten von zwei zueinander zumindest angenähert parallelen Kernfrontflächen (9) begrenzt ist und der mehrere zueinander parallel verlaufende und miteinander verbundene Stützwellen (4) aus flächigem Material aufweist, deren Wellenerzeugenden zumindest nahezu senkrecht auf den Kernfrontflächen (9) stehen, gekennzeichnet durch zwischen benachbarten Stützwellen (4) angeordnete Versteifungswellen (5) aus flächigem Material, deren Wellenerzeugenden senkrecht zu denen der Stützwellen (4) verlaufen, wobei benachbarte Stütz- und Versteifungswellen (4, 5) an ihren Wellenbergen direkt oder über ebene Stabilisierungslagen (10) aus flächigem Material miteinander verbunden sind.

2. Leichtbaukern nach Anspruch 1, dadurch gekennzeichnet, daß zumindest ein Teil der Stützwellen (4) und/oder der Versteifungswellen (5) und/oder der ebenen Stabilisierungslagen (10) aus Papier besteht.

3. Leichtbaukern nach Anspruch 1 oder 2, dadurch gekennzeichnet, daß zumindest ein Teil der Stützwellen (4) und/oder der Versteifungswellen (5) und/oder der ebenen Stabilisierungslagen (10) mit einem Kunstharz imprägniert ist.

4. Leichtbaukern nach Anspruch 3, dadurch gekennzeichnet, daß das Kunstharz als Bindemittel zur gegenseitigen Verbindung einzelner Elemente des Leichtbaukernes (8) dient.

5. Leichtbaukern nach einem der Ansprüche 1 bis 4, dadurch gekennzeichnet, daß zwischen zwei benachbarten Versteifungswellen (5) mindestens zwei parallel zueinander verlaufende Stützwellen (4) liegen.

6. Verbundbauteil mit einem Leichtbaukern, dessen Frontflächen durch Verklebung mit steifen Deckschichten verbunden sind, dadurch gekennzeichnet, daß als Leichtbaukern einer gemäß der Ansprüche 1 bis 5 eingesetzt ist.

7. Ski mit Leichtbaukern, dadurch gekennzeichnet, daß als Leichtbaukern einer gemäß den Ansprüchen 1 bis 5 eingesetzt ist, bei welchem die Stützwellen (4) in Skilängsrichtung verlaufen.

## Claims

1. Lightweight core, which is bounded on two opposing sides by two core front faces (9) at least approximately parallel to each other, and which has several supporting undulations (4) of sheet material running parallel to each other and connected to each other, the undulation generatrices of which are at least almost perpendicular to the core front faces (9), characterised by reinforcing undulations (5) arranged between adjacent supporting undulations (4) and made of sheet material, the undulation generatrices of which run perpendicular to those of the supporting undulations (4), adjacent supporting and reinforcing undulations (4, 5) being connected to each other at their undulation crests directly or via plane sheet stabilising layers (10) made of sheet material.

2. Lightweight core according to Claim 1, characterised in that at least a part of the supporting undulations (4) and/or the reinforcing undulations (5) and/or the plane sheet stabilising layers (10) consists of paper.

3. Lightweight core according to Claims 1 or 2, characterised in that at least a part of the supporting undulations (4) and/or the reinforcing undulations (5) and/or the plane sheet stabilising layers (10) is impregnated with a synthetic resin.

4. Lightweight core according to Claim 3, characterised in that the synthetic resin serves as a bonding agent for reciprocally bonding individual elements of the lightweight core (8).

5. Lightweight core according to one of Claims 1 to 4, characterised in that there are at least two supporting undulations (4) running parallel to each other between two adjacent reinforcing undulations (5).

6. Composite component with a lightweight core, the front faces of which are joined by gluing to stiff cover layers, characterised in that a lightweight core according to claims 1 to 5 is used as a lightweight core.

7. Ski with lightweight core, characterised in that a lightweight core according to Claims 1 to 5 is used as a lightweight core, in which the supporting undulations (4) run in the longitudinal direction of the ski.

**Revendications**

1. Armature de construction allégée qui est délimitée sur deux côtés opposés par deux surfaces frontales (9) au moins approximativement parallèles et qui présente plusieurs ondulations d'appui (4) formées d'un matériau plan mince qui s'étendent parallèlement entre elles, qui sont reliées entre elles et dont les génératrices sont au moins approximativement perpendiculaires aux surfaces frontales (9), caractérise par des ondulations de raidissement (5) qui sont disposées entre des ondulations d'appui (4) voisines, formées à partir d'un matériau plan relativement mince et dont les génératrices sont perpendiculaires à celles des ondulations d'appui (4), les ondes d'appui et les ondes de raidissement (4, 5) voisines étant reliées entre elles par leurs crêtes directement ou par l'intermédiaire de couche de renforcement (10) planes formées à partir d'un matériau plan relativement mince.

2. Armature de construction allégée selon la revendication 1, caractérisée par le fait qu'au moins une partie des ondulations d'appui (4) et/ou des ondulations de raidissement (5) et/ou des couches de renforcement (10) planes sont formées de papier.

3. Armature de construction allégée selon la revendication 1 ou 2, caractérisée par le fait qu'au moins une partie des ondulations d'appui (4) et/ou des ondulations de raidissement (5) planes sont imprégnées d'une résine synthétique.

4. Armature de construction allégée selon la revendication 3, caractérisée par le fait que la résine synthétique assure la liaison entre les différents éléments de l'armature.

5. Armature de construction allégée selon l'une des revendications 1 à 4, caractérise par le fait que, entre deux ondulations de raidissement (5) voisines, sont disposées au moins deux ondulations d'appui (4) qui s'étendent parallèlement l'une à l'autre.

6. Elément de construction composite comportant une armature de construction allégée dont les faces frontales sont liées par collage à des couches rigides de couverture, caractérisé en ce que ladite couverture est telle que définie dans les revendications 1 à 5.

7. Ski comportant une armature de construction allégée, caractérisé en ce que l'armature est telle que définie dans les revendications 1 à 5, dans laquelle les ondulations d'appui (4) s'étendent dans la direction longitudinale du ski.

**Fig. 1**

**Fig. 2**

**Fig. 3**

1

*Fig.4*

*Fig.5*